# FASCICULE DE BREVET EUROPEEN

(11) **EP 3 560 019 B1**
(45) Date de publication et mention de la délivrance du brevet: **03.02.2021**
(21) Numéro de dépôt: 17821697.4
(22) Date de dépôt: 08.12.2017
(51) Int. Cl.: H01M 8/1004, H01M 8/0273, H01M 8/0286, H01M 8/1018

(54) **PROCÉDÉ DE FABRICATION D'ASSEMBLAGE MEMBRANE-ÉLECTRODE POUR PILE À COMBUSTIBLE**
VERFAHREN ZUR HERSTELLUNG MEMBRAN-ELEKTRODEN-EINHEIT FÜR EINE BRENNSTOFFZELLE
PROCESS OF MANUFACTURING A MEMBRANE-ELECTRODE ASSEMBLY FOR A FUEL CELL

(30) Priorité: 20.12.2016 FR 1662835
(43) Date de publication de la demande: 30.10.2019
(73) Titulaire: Compagnie Générale des Etablissements Michelin, 63000 Clermont-Ferrand (FR)
(72) Inventeur: JOYE, Olivier, 63040 Clermont-Ferrand Cedex 9 (FR)
(74) Mandataire: Lavoix
(86) Numéro de dépôt international: PCT/FR2017/053469
(87) Numéro de publication internationale: WO 2018/115629

(56) Documents cités:
- EP-A1- 2 698 250
- WO-A1-2009/106620
- DE-A1-102016 001 580
- FR-A1- 2 977 725

## Description

### DOMAINE DE L'INVENTION

La présente invention concerne le domaine des piles à combustibles, et plus particulièrement le domaine de la fabrication et de l'assemblage de piles à combustible.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré.

Cet ensemble comprenant l'élément cathodique, l'élément anodique et l'électrolyte solide forme un assemblage membrane-électrode, également appelé AME. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle. Des couches de diffusion de gaz, par exemple réalisées en tissu de carbone, sont installées de part et d'autre des AME pour assurer la conduction électrique et l'arrivée homogène des gaz réactifs fournis via les plaques bipolaires.

La présente invention vise à proposer un procédé de fabrication d'assemblage membrane-électrode pour pile à combustible.

### BREVE DESCRIPTION DE L'INVENTION

Ainsi l'invention concerne un procédé de fabrication d'un assemblage membrane-électrode pour pile à combustible, comprenant une membrane, deux renforts, deux joints, des couches de diffusion gazeuse et une catalyse, le procédé comprenant les étapes suivantes :
- Une étape au cours de laquelle on dépose un joint sur chacun des renforts par sérigraphie,
- Une étape au cours de laquelle on colle à chaud, sur chacune des faces de la membrane, un renfort porteur d'un joint sérigraphié,
- Une étape au cours de laquelle on dépose un élément chimique catalyseur sur deux couches de diffusion gazeuse,
- Une étape au cours de laquelle on colle à chaud une couche de diffusion gazeuse sur chacune des faces de la membrane porteuse d'un renfort et d'un joint,
le procédé étant tel que les différents éléments sont maintenues sur un support par aspiration pendant au moins une partie des étapes du procédé.

On précise ici que dans la suite de la description, l'expression « élément chimique catalyseur » pourra être remplacée par le terme « catalyse » par souci de simplification de l'exposé. Cet élément chimique catalyseur est préférentiellement une encre comprenant du platine, de l'eau et des solvants

L'utilisation de couches de diffusion gazeuse est avantageuse car le procédé de catalyse de telles couches est plus aisé que le dépôt de catalyse sur une membrane échangeuse d'ions. En effet, les couches de diffusion ont une tendance à attirer la catalyse, ce qui rend le procédé plus stable. En outre, les couches de diffusion gazeuse sont également plu stables mécaniquement.

En outre, une couche de diffusion gazeuse n'est catalysée que sur une face. Par conséquent, en cas de mauvais dépôt, on perd uniquement une couche de diffusion gazeuse. Dans le cas d'une membrane catalysée, on dépose de la catalyse sur les deux couches, ce qui augmente le risque d'une mauvaise catalyse, et donc le risque de devoir jeter une membrane échangeuse d'ions qui coûte relativement cher.

Dans un mode de réalisation, l'étape au cours de laquelle on dépose un élément chimique catalyseur sur une couche de diffusion est effectuée en utilisant un procédé de dépôt direct compris dans le groupe comprenant : la flexographie, la sérigraphie et l'enduction.

La catalyse est généralement déposée sous forme d'une encre contenant des solvants. Avant de manipuler les couches de diffusion catalysées, il est utile d'attendre que l'évaporation des solvants soit terminée. Dans le cas où on souhaiterait diminuer ce temps, il est possible, dans un mode de réalisation préférentiel, de prévoir une étape de séchage de la catalyse.

De la même façon, dans un mode de réalisation préférentiel, l'étape au cours de laquelle on dépose un joint par sérigraphie comprend une étape de polymérisation et de séchage des joints.

Dans un autre mode de réalisation encore, l'étape au cours de laquelle on dépose un joint par sérigraphie comprend une étape de contrôle de la qualité du joint. Cette étape peut être effectuée par une caméra HD qui vérifie la géométrie du joint, ou par une lecture laser qui mesure la géométrie en trois dimensions du joint. Cette étape peut être complétée en outre par une étape d'inscription d'un numéro de série et/ou d'identification sur l'ensemble renforts + joints, cette impression étant par exemple effectuée par jet d'encre, ou par impression laser ou matricielle.

Dans un mode de réalisation de l'invention, l'étape de collage à chaud est effectuée à une température comprise entre 100°C et 150°C, et encore plus préférentiellement à une température comprise entre 100°C et 120°C

L'invention concerne également une ligne de fabrication d'assemblage membrane électrodes, comprenant un circuit permettant le déplacement d'un chariot sur lequel est installé un moule composé de secteurs en métal poreux d'un poste de fabrication à l'autre, chacun des postes permettant la mise en œuvre de l'une ou l'autre des étapes d'un procédé.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre schématiquement l'ensemble des étapes d'un procédé d'assemblage de pile à combustible mettant en œuvre un procédé de fabrication selon l'invention
- la figure 2 montre un procédé de sérigraphie pouvant être mis en œuvre dans un procédé selon l'invention,
- la figure 3 montre un procédé de flexographie pouvant être mis en œuvre dans un procédé selon l'invention, et
- la figure 4 montre une ligne d'assemblage permettant la mise en œuvre d'un procédé selon l'invention.

### DESCRIPTION DU MEILLEUR MODE DE REALISATION DE L'INVENTION

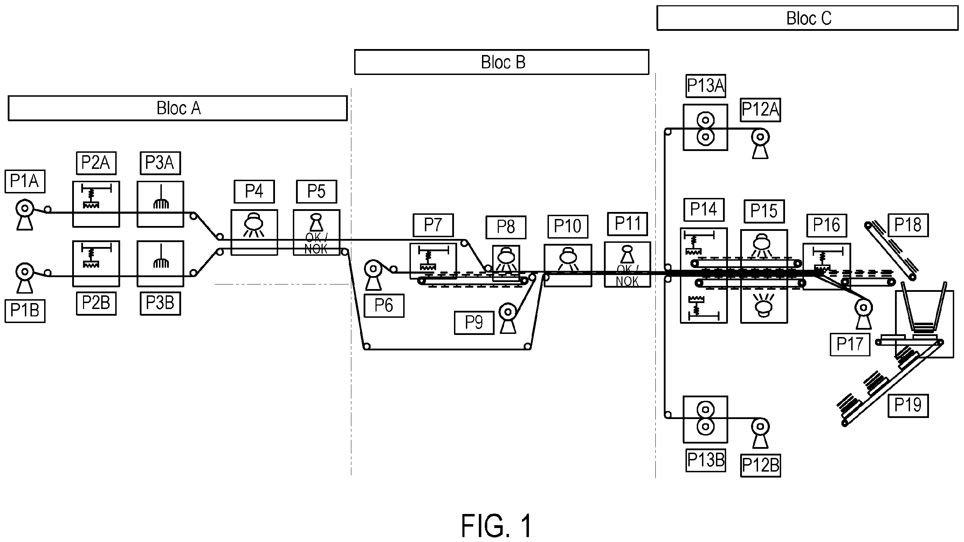

Sur la figure 1 montre les étapes d'un procédé selon l'invention. Ce procédé est schématiquement séparé en trois grands blocs :
- Un bloc A correspondant au dépôt des joints par sérigraphie sur des renforts,
- Un bloc B correspondant à la préparation et au découpage des membranes et à leur intégration entre les renforts,
- Un bloc C correspondant à la préparation des couches de diffusion gazeuse et à l'assemblage final de la pile à combustible.
Chacun de ces blocs est composé de plusieurs étapes qui vont être décrites en détail. Sur la figure 1, chaque étape est représentée par un pictogramme représentant les moyens matériels permettant la mise en œuvre de cette étape.

**Dépôt des joints par sérigraphie sur les renforts :** Les renforts utilisés dans les piles à combustible sont des films polymères qui sont généralement livrés sous forme de rouleaux. Les étapes P1A et P1B correspondent donc à une étape de déroulage de deux renforts, respectivement un renfort supérieur (P1A) et un renfort inférieur (P1B). Ces rouleaux de renfort sont livrés avec de l'adhésif réactivable présent sur une face.

Une fois les renforts déroulés, ils sont découpés, respectivement aux étapes P21 et P2B. Les découpes, effectuées par laser ou par emboutissage, permettent la création des formes intérieures du renfort. En effet, les éléments de renforts sont destinés à être positionnés ultérieurement de manière à prendre en sandwich la bordure de la membrane sur toute sa périphérie, tout en laissant libre une partie centrale de la membrane.

Les étapes P3A et P3B correspondent au dépôt des joints par sérigraphie sur le renfort supérieur et inférieur.

Après dépôt des joints par sérigraphie, on prévoit une étape P4 de polymérisation et de séchage des joints. Dans un exemple particulier de réalisation, les joints sont positionnés sur un chariot qui se déplace dans un tunnel d'une longueur de quatre mètres à une vitesse de 1,5 mètre par minutes, le tunnel étant placé à une température intérieure comprise entre 110°C et 150°C.

On contrôle ensuite, au cours de l'étape P5, la qualité de chacune des ensemble « renfort + joint ». Ce contrôle est effectué par exemple par une caméra haute définition ou par un lecteur laser. Les ensembles « renfort + joint » sont ensuite prêts à être déposés sur une membrane catalysée, comme décrit dans les prochains paragraphes.

### Préparation et Découpage des membranes et à leur intégration entre les renforts :

La membrane est un film polymère généralement livré en rouleau entre deux intercalaires. Ainsi, de manière avantageuse, le procédé comprend, une étape P6 au cours de laquelle on déroule la membrane et on la sépare des deux intercalaires.

La membrane est ensuite découpée, au cours d'une étape P7, au format correspondant par rapport à l'empilement souhaité, en utilisant une découpeuse cutter. Pendant cette étape de découpe, la membrane est maintenue en position par aspiration avec des ventouses, ou par des supports en aluminium fritté. On précise que l'étape de découpe comprend une découpe en largeur et une découpe en longueur. Dans un exemple de réalisation, il est possible de découper la bande en largeur avant le retrait de l'intercalaire, et de faire la découpe en longueur ultérieurement.

On colle alors, dans une étape P8, le premier ensemble « renfort+joint », issu du bloc A, sur la face supérieure de la membrane. Le collage est effectué à chaud à une température par exemple comprise entre 100°C et 150°C, et préférentiellement entre 100°C et 120°C.

On colle ensuite, à l'étape P10, le deuxième ensemble «renfort + joint » sur la face inférieure de la membrane. Ce collage est effectué dans les mêmes conditions que celui de l'étape P8. On contrôle ensuite la qualité de l'ensemble membrane + renforts + joints, par exemple en utilisant une caméra haute définition, à l'étape P11.

De manière avantageuse, les étapes P8 et P10 sont simultanées, et on presse donc les deux renforts ensemble.

**Préparation des couches de diffusion gazeuse et assemblage final :** Un procédé selon l'invention prévoit l'utilisation de couches de diffusion gazeuse catalysées. A cet effet, les étapes P13A et P13B correspondent au dépôt d'une catalyse sur les deux couches de diffusion. Ce dépôt de catalyse est effectué par sérigraphie, par sprayage, par flexographie ou par enduction. Au préalable, on déroule, aux étapes P12A et P12B les rouleaux de tissu carbone destiné à la formation des couches de diffusion gazeuse.

Les couches de diffusion catalysées sont alors découpées, à l'étape P14, puis déposées et collées à chaud sur chacune des faces de l'ensemble « membrane + renforts + joints ». L'étape de pressage, ou collage, à chaud de ces couches de diffusion est effectuée à 135°C pendant 4 minutes, en appliquant une pression de l'ordre de 10MPa.

L'étape P16 est une ultime étape de découpe, permettant le découpage extérieur de l'assemblage membrane-électrodes et des collecteurs de gaz de la pile à combustible. Au cours de l'étape P17, on évacue les déchets issus de cette découpe, et l'étape P18 correspond à l'arrivée des plaques bipolaires et à un empilement alternatif d'un assemblage membrane-électrode / plaque bipolaire, pour obtenir une pile à combustible complète en étape P19.

### Sérigraphie et flexographie :

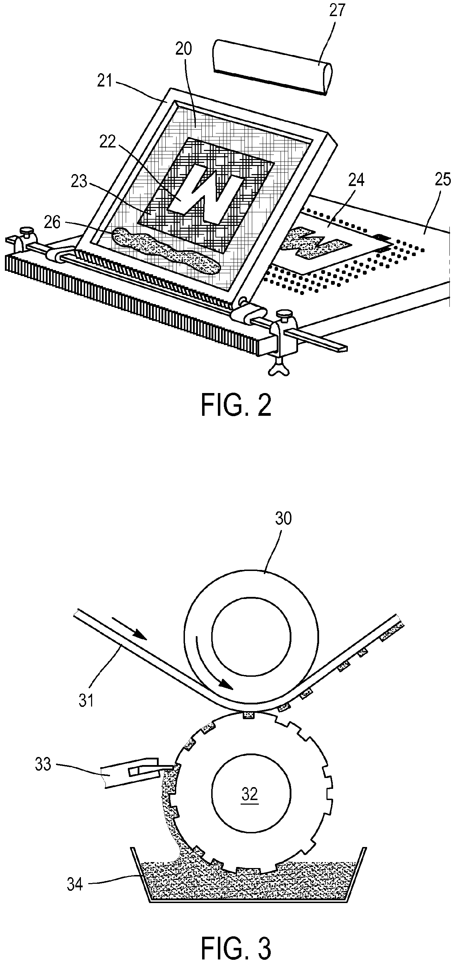

La figure 2 montre un système permettant la mise en œuvre d'un procédé de sérigraphie tel qu'utilisé dans plusieurs étapes de la présente invention. Ce système comprend un écran ou cadre 20, formé d'un tissu en PET 21, également appelé treillis, dont les mailles et le diamètre de fil peuvent être adaptés aux différentes utilisations.

Pour la création du motif à réaliser, le tissu est enduit d'un produit photosensible appelé émulsion sur lequel est déposé un chablon correspondant au motif à réaliser. Dans le cas présent, le motif à réaliser correspond à la partie centrale d'une membrane échangeuse d'ions, laissée libre après l'installation des renforts.

Après avoir subi une exposition à une lampe UV, le produit photosensible durcit à l'exception de la zone masquée par le chablon. Le surplus est ensuite nettoyé. Ainsi, le treillis comporte alors des mailles ouvertes 22, formant le motif, et des mailles obturées 23.

Une fois ce cadre, ou écran, fabriqué, il est alors possible d'effectuer un dépôt de catalyse par sérigraphie. Pour ce faire, l'élément 24 à catalyser est installé sur le support 25, la face à catalyser étant installée vers le haut. On précise que dans le cas où l'élément 24 est une couche de diffusion gazeuse, la catalyse est déposée sur une couche microporeuse. L'écran 20 est alors positionné sur le support 25, au-dessus de l'élément 24. Une quantité suffisante de catalyse 26 est alors déposée sur le cadre, et étalé de façon régulière sur le motif mais sans appuyer trop fort pour éviter de lui faire traverser le treillis. Cette opération est appelée « le nappage ».

Puis, une racle 27 formée d'un profil de polyuréthane ou métallique dont la dureté et la raideur peuvent être adaptées, est passée tout le long du profil avec un angle variable proche de 45°. On précise ici que le cadre 20 est installé un peu au-dessus du support 25 de manière à éviter un contact entre les deux avant le passage de la racle.

La racle 27 va alors forcer le treillis 21 à se déformer, l'amenant au contact du support 32. Le La catalyse est ensuite forcée au passage de la racle à traverser le treillis pour venir se déposer sur l'élément 24.

La racle permet aussi de racler le surplus de catalyse à la surface de l'écran, celle-ci étant dès lors prête pour une deuxième dépose.

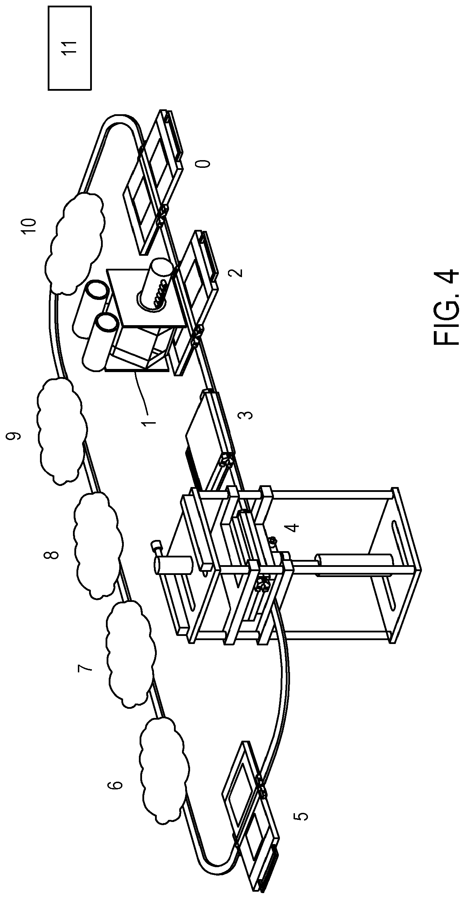

La figure 3 permet d'illustrer un autre procédé pour effectuer ce dépôt sous forme de motif, à savoir un procédé de flexographie, également appelé « tampon encreur ». Le système montré en figure 4 comprend un rouleau de support 30, sur lequel est installé un élément 31 à catalyser. Le système comprend également un rouleau encreur 32 sur lequel le motif à déposer est formé en surépaisseur. Le système comprend en outre une roulette 33 destinée à éliminer, après trempage dans le bac, l'encre présente sur les parties du rouleau encreur ne formant pas le motif.

Ainsi, lors du contact entre le rouleau de support 30 et le rouleau encreur 32, le motif dessiné sur le rouleau encreur 32 est transféré sur l'élément 31.

**Ligne d'assemblage** : La figure 4 illustre un exemple de ligne d'assemblage permettant la mise en œuvre d'un procédé selon l'invention. Cette ligne comprend un circuit 100 permettant le déplacement d'un chariot sur lequel est installé un moule en métal poreux 200 qui servira de support aux différentes étapes d'assemblage du procédé. Sur la figure 4, certains postes sont représentés en détail, quand d'autres sont simplement schématisés.

L'utilisation d'un métal poreux permet de brancher, sous le moule, des pompes à vide, non représentées sur la figure, qui permettent le maintien des différents éléments en position sur le moule.

En entrée de la ligne d'assemblage, au point 0, le moule reçoit deux ensembles « renforts + joints », par exemple issus de l'étape P6 de la figure 1. Dans la suite, pour simplifier la description, on utilisera uniquement le terme « renforts » pour désigner ces ensembles.

Le poste 1 est un poste permettant la manipulation de la membrane 300 Ainsi, le moule portant les renforts et joints se positionne sous le poste 1, et accueille la membrane sur un des deux renforts. Ce poste permet également un échenillage de la membrane, c'est-à-dire une séparation de la membrane et de la ou des intercalaires qui l'entourent lors de son transport sous forme de rouleau. Au poste 3, le moule est refermé, ce qui permet un positionnement du deuxième renfort. Le poste 4 permet un pressage à chaud, à une température préférentiellement située en 100°C et 120°C. L'action de pressage est effectuée par la poussée verticale d'un vérin installé sous le moule lorsque celui-ci est présent dans le poste et en butée supérieure sur une plaque de blocage.

La ligne d'assemblage comporte ensuite les postes suivants :
- Le poste 5 permet le refroidissement de l'ensemble renforts + membrane,
- Au poste 6, une couche de diffusion gazeuse est déposée sur une première face de la membrane, et le moule est refermé. On précise ici que, dans certains cas, la couche de diffusion gazeuse comporte une bande de colle. Cette bande de colle est apposée via une encolleuse, et dans ce cas, la ligne d'assemblage comprend un robot équipé d'une ventouse ou d'un préhenseur électrostatique pour transporter la couche de diffusion gazeuse depuis l'encolleuse jusqu'à la ligne d'assemblage.
- Au poste 7, on procède à un retournement de l'assemblage, afin que la seconde face de la membrane devienne la face supérieure ; Ce retournement est effectué par une simple ouverture du moule, combinée à une commande d'aspiration sur chacune des plaques du moule. En effet, lors de l'ouverture du moule, la plaque pour laquelle l'aspiration a été coupée n'emportera aucun élément, quand l'assemblage restera solidaire de la plaque pour laquelle l'aspiration est maintenue. De manière préférentielle, on utilise en outre des pinces, présentes sur le moule, pour renforcer le positionnement des différents éléments sur le moule.
- Au poste 8, on dépose une couche de diffusion gazeuse sur la seconde face de la membrane, et on referme le moule,
- Au poste 9, on presse l'ensemble à chaud, en utilisant des moyens similaires à ceux du poste 4. On précise toutefois que cette étape de pressage à chaud est optionnelle,
- Au poste 10, on procède à l'ouverture du moule, et on imprime éventuellement sur l'assemblage des numéros de série ou d'identification, par jet d'encre ou par impression laser ou matricielle.
- Enfin, au poste 11, la MEA est récupérée pour une étape de découpage final correspondant à l'étape P17 de la figure 1.

L'ensemble des opérations se font sous une atmosphère contrôlée en termes de poussière, de température et d'humidité pour éviter une dégradation de l'assemblage. En outre, comme précédemment indiqué, le vide est fait à chaque poste au niveau des plaques du moule, pour gérer la solidarisation des différents éléments avec le moule. Dans un mode de réalisation préférentiel, les moules sont équipés de réservoir de secours pour pallier à toute micro-fuite qui pourrait de produire lors du déplacement du moule entre deux postes.

## Revendications

1. Procédé de fabrication d'un assemblage membrane-électrode pour pile à combustible, comprenant une membrane, deux renforts, deux joints, des couches de diffusion gazeuse et une catalyse, le procédé comprenant les étapes suivantes :
- Une étape au cours de laquelle on dépose un joint sur chacun des renforts par sérigraphie,
- Une étape au cours de laquelle on colle à chaud, sur chacune des faces de la membrane, un renfort porteur d'un joint sérigraphié,
- Une étape au cours de laquelle on dépose un élément chimique catalyseur sur deux couches de diffusion gazeuse,
- Une étape au cours de laquelle on colle à chaud une couche de diffusion gazeuse catalysée sur chacune des faces de la membrane porteuse d'un renfort et d'un joint,
le procédé étant tel que les différents éléments sont maintenues sur un support par aspiration pendant au moins une partie des étapes du procédé.

2. Procédé de fabrication selon la revendication 1, dans lequel l'étape au cours de laquelle on dépose un élément chimique catalyseur sur une couche de diffusion gazeuse est effectuée en utilisant un procédé de dépôt direct compris dans le groupe comprenant : la flexographie, la sérigraphie et l'enduction.

3. Procédé de fabrication selon la revendication 2, dans lequel l'étape au cours de laquelle on dépose un élément chimique catalyseur comprend en outre une étape de séchage de la catalyse.

4. Procédé de fabrication selon l'une des revendications précédentes dans lequel l'étape au cours de laquelle on dépose un joint par sérigraphie comprend une étape de séchage des joints.

5. Procédé de fabrication selon l'une des revendications précédentes dans lequel l'étape au cours de laquelle on dépose un joint par sérigraphie comprend une étape de contrôle de la qualité du joint.

6. Procédé de fabrication selon l'une des revendications précédentes, dans lequel l'étape de collage à chaud est effectuée à une température comprise entre 100 et 150°C.

7. Ligne de fabrication d'assemblage membrane électrodes, comprenant un circuit (100) permettant le déplacement d'un chariot sur lequel est installé un moule en métal poreux 200 d'un poste de fabrication à l'autre, chacun des postes permettant la mise en œuvre de l'une ou l'autre des étapes d'un procédé selon l'une des revendications 1 à 6.

## Patentansprüche

1. Verfahren zur Herstellung einer Baugruppe Membran-Elektrode für eine Brennstoffzelle, die eine Membran, zwei Verstärkungen, zwei Dichtungen, Gasdiffusionsschichten und einen Katalysator aufweist, wobei das Verfahren die folgenden Schritte umfasst:
- einen Schritt, während dessen eine Dichtung auf jede der Verstärkungen durch Siebdruck aufgebracht wird,
- einen Schritt, während dessen auf jeder der Seiten der Membran eine Trägerverstärkung für eine mit Siebdruck aufgebrachte Dichtung heißverklebt wird,
- einen Schritt, während dessen ein chemisches Katalysatorelement auf zwei Gasdiffusionsschichten aufgebracht wird,
- einen Schritt, während dessen eine katalysierte Gasdiffusionsschicht auf jede der Seiten der Trägermembran einer Verstärkung und einer Dichtung heißverklebt wird,
wobei das Verfahren derart ist, dass die unterschiedlichen Elemente auf einem Träger durch Ansaugen während mindestens einem Teil der Schritte des Verfahrens gehalten werden.

2. Herstellungsverfahren nach Anspruch 1, bei dem der Schritt, während dessen ein chemisches Katalysatorelement auf eine Gasdiffusionsschicht aufgebracht wird, so durchgeführt wird, dass ein direktes Aufbringungsverfahren verwendet wird, das von der Gruppe umfasst wird, die umfasst: Flexodruck, Siebdruck und Beschichtung.

3. Herstellungsverfahren nach Anspruch 2, bei dem der Schritt, während dessen ein chemisches Katalysatorelement auf eine Gasdiffusionsschicht aufgebracht wird, außerdem einen Trocknungsschritt der Katalysator umfasst.

4. Herstellungsverfahren nach einem der vorhergehenden Ansprüche, bei dem der Schritt, während dessen eine Dichtung durch Siebdruck aufgebracht wird, einen Trocknungsschritt der Dichtungen umfasst.

5. Herstellungsverfahren nach einem der vorhergehenden Ansprüche, bei dem der Schritt, während dessen eine Dichtung durch Siebdruck aufgebracht wird, einen Schritt der Überwachung der Qualität der Dichtung umfasst.

6. Herstellungsverfahren nach einem der vorhergehenden Ansprüche, bei dem der Schritt der Heißverklebung bei einer Temperatur zwischen 100 und 150 °C durchgeführt wird.

7. Herstellungslinie einer Baugruppe Membran-Elektroden, die einen Umlaufkreis (100) umfasst, der die Bewegung eines Wagens, auf dem eine Form aus porös Metall 200 installiert ist, von einer Herstellungsstation zur anderen ermöglicht, wobei jede der Stationen die Durchführung des einen oder des anderen der Schritte eines Verfahrens nach einem der Ansprüche 1 bis 6 erlaubt.

## Claims

1. Method for manufacturing a membrane electrode assembly for a fuel cell, comprising a membrane, two reinforcers, two seals, gas diffusion layers and a catalyst, the method comprising the following steps:
- a step during which a seal is applied to each of the reinforcers using screen printing,
- a step during which a reinforcer bearing a screen-printed seal is thermally bonded to each of the faces of the membrane,
- a step during which a catalytic chemical element is applied to two gas diffusion layers,
- a step during which a catalysed gas diffusion layer is thermally bonded to each of the faces of the membrane bearing a reinforcer and a seal,
the method being such that the various elements are held on a support by suction during at least some of the steps of the method.

2. Manufacturing method according to Claim 1, in which the step during which a catalytic chemical element is applied to a gas diffusion layer is performed using a direct-deposition method included in the group comprising: flexography, screen printing and coating.

3. Manufacturing method according to Claim 2, in which the step during which a catalytic chemical element is applied further comprises a step of drying the catalyst.

4. Manufacturing method according to one of the preceding claims, in which the step during which a seal is applied by screen printing comprises a step of drying of the seals.

5. Manufacturing method according to one of the preceding claims, in which the step during which a seal is applied by screen printing comprises a step of inspecting the quality of the seal.

6. Manufacturing method according to one of the preceding claims, in which the hot-bonding step is performed at a temperature comprised between 100 and 150°C.

7. Production line for manufacturing membrane electrode assemblies, comprising a circuit (100) allowing a carriage, on which is installed a mould 200 made up of porous metal segments, to be moved from one manufacturing workstation to another, each of the workstations allowing implementation of one or another of the steps of a method according to one of Claims 1 to 6.
